Europäisches Patentamt

European Patent Office

Office européen des brevets

(11) Veröffentlichungsnummer: **0 278 362 B1**

(12) **EUROPÄISCHE PATENTSCHRIFT**

(45) Veröffentlichungstag der Patentschrift: **12.02.92**

(21) Anmeldenummer: **88101444.3**

(22) Anmeldetag: **02.02.88**

(51) Int. Cl.5: **B29B 11/10**, B29B 11/14, B29B 11/16

(54) **Verfahren und Vorrichtung zum Herstellen formhaltigen Halbzeugs aus Thermoplast enthaltendem Bindemittel sowie Halbzeug.**

(30) Priorität: **13.08.87 DE 3726921**
**10.02.87 DE 3704037**

(43) Veröffentlichungstag der Anmeldung:
**17.08.88 Patentblatt 88/33**

(45) Bekanntmachung des Hinweises auf die
Patenterteilung:
**12.02.92 Patentblatt 92/07**

(84) Benannte Vertragsstaaten:
**AT BE CH DE ES FR GB IT LI LU NL SE**

(56) Entgegenhaltungen:
**DE-A- 2 450 374**
**DE-A- 3 600 537**
**DE-B- 1 247 002**
**US-A- 2 485 523**
**US-A- 3 827 213**

**PATENT ABSTRACTS OF JAPAN, Band 8, Nr. 268 (E-283)[1705], 7. Dezember 1984; & JP-A-59 139 633 (HITACHI)**

(73) Patentinhaber: **Menzolit GmbH**
**Bahnhofstrasse 31**
**W-7527 Kraichtal-Menzingen(DE)**

(72) Erfinder: **Ehnert, Gerd**
**Brucknerstrasse 6**
**W-7523 Graben-Neudorf(DE)**
Erfinder: **Ehlers, Manfred**
**Friedrichstrasse 11**
**W-7527 Kraichtal-Unteröwisheim(DE)**
Erfinder: **Paumgartten, Rolf von**
**Spitzwegstrasse 6**
**W-6908 Wiesloch(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**W-7500 Karlsruhe 41(DE)**

EP 0 278 362 B1

**Beschreibung**

Die Erfindung betrifft ein Verfahren zum Herstellen von formhaltigem Halbzeug aus Fasern und aus Thermoplast aufweisendem Bindemittel und eine Vorrichtung zur Durchführung des Verfahrens zwecks Herstellung von formhaltigem Halbzeug aus faserverstärktem Thermoplast sowie ein Halbzeug aus faserverstärktem Thermoplast.

Als Verstärkungsfasern werden insbesondere geschnittene Glasfasern, aber auch andere mineralische, anorganische oder sonstige künstliche Fasern, wie Kohlefasern, Aramidfasern oder Polyester-Fasern angesprochen. Soweit im folgenden von Glasfasern gesprochen wird, können diese auch durch die vorgenannten Fasern ersetzt werden. Geschnittene Glasfasern werden in großem Umfang zur Herstellung von glasfaserverstärkten Kunststoffteilen verwendet. Die Glasfasern werden durch ein Bindemittel gebunden, welches als Hauptbestandteil oder Matrix einen Thermoplasten, wie Polypropylen aufweist sowie zusätzlich Ruß, Wachs und sonstige Additive und chemische Koppler aufweisen kann. In der Praxis geschieht die Herstellung von in einer Presse zu einem Formteil preßbaren Halbzeug in einer Ausgestaltung durch Ausstreuen der Fasern zu einem Vlies und Imprägnieren desselben mit flüssigem Kunstharz. In einer anderen Ausgestaltung werden die Fasern in flüssiger Phase zu einer Aufschlämmung verarbeitet, die durch Rühroder Mischbewegungen zu einem Wirrfaserstoff verarbeitet wird. Auch hierbei werden flüssige Kunstharze oder pulvrige Bindemittel in Verbindung mit einer wässrigen Aufschlämmung eingesetzt. Im letztgenannten Fall wird die Aufschlämmung nach Bildung eines Wirrfaservlieses getrocknet. In beiden Fällen muß die Stärke und die Breite des Vlieses an die zu formenden Formteile angepaßt werden, ersteres notwendigerweise, letzteres um zu großen Abfall zu vermeiden. Weiterhin muß das Vlies anschließend zu einzelne Platten in Anpassung an die herzustellenden Formteile geschnitten werden.

Es ist ferner vorgeschlagen worden (DE-36 04 888 A1), flüssige Benetzungsmittel mit einem Anteil von maximal 20 Gew. -% zuzusetzen, um so eine feuchte, jedoch noch rieselförmige Masse zu erhalten, die als Zwischenprodukt in Kunststoffbeuteln verpackt an den Weiterverarbeiter weitergegeben oder ebenfalls in einer beheizten Bandpresse zu vorgeformten Plattenmaterial verarbeitet werden kann.

Insbesondere die erstgenannten Verfahren sind sehr aufwendig und erfordern erhebliche Investitionen. Bei allen vorgenannten Verfahren ist eine Konfektion des Halbzeugs erforderlich, was die Verfahren unflexibel macht und Anpassungen an andere Formteile verhindert bzw. erheblich erschwert.

Es wurde weiterhin schon vorgeschlagen, Glasfaserbündel zusammen mit den Thermoplast enthaltenden Bindemitteln in einer Wirbelkammer zu einem watteartigen Filz zu verwirbeln und anschließend entweder unter Vakuum zu packen, vorzugsweise in Kunststoffbeuteln aus mit dem Thermoplast des Bindemittels kompatiblem, insbesondere gleichem Material oder aber dieses direkt zur Weiterverarbeitung zur Verfügung zu stellen (P 37 04 035.9).

Dem Oberbegriff der unabhängigen Ansprüchen liegt die EP-A-258 684 zugrunde. Diese Druckschrift beschreibt die Herstellung einer schütt- und rieselförmigen Mischung aus den entsprechenden Komponenten des herzustellenden Formteils, nämlich Fasern und Thermoplast enthaltendem Bindemittel. Hierbei ergab sich das Problem, die hergestellte Trockenmischung bei längerer Lagerzeit bzw. Transport in der guten gleich verteilten Durchmischung der einzelnen Komponenten zu halten, also das Problem der Beständigkeit der Mischung.

Die US-A-3 827 213 beinhaltet eine Vorrichtung zum Packen von Abfall aus Verpackungsfolie aus synthetischem Harz. Hier fallen Folienschnitzel an, die zusammengepreßt und als Endlosstrang extrudiert werden.

Die DE-A-24 50 374 betrifft ein Verfahren zum Herstellen von Formkörpern aus thermoplastischen Preßmassen, die gegebenenfalls neben Füllstoffen im wesentlichen aus einem Thermoplast und einem anderen blattförmigen, geschnitzelten Werkstoff, wie Papier, bestehen, der mit dem Thermoplast eine Hartverbindung einzugehen vermag.

Die Komponenten werden über einen Fülltrichter mit Rührwerk einer Stopfschnecke zugeführt und dort kalt vorverdichtet. Die vorverdichtete Mischung wird einem Extruder zugeführt, beheizt und während des Transports zum Mundstück des Extruders weiter durchmischt und zu einer homogenen hochviskosen plastischen Masse verdichtet. Anschließend wird auf die Preßmasse ein so hoher Druck ausgeübt, daß auf der Oberfläche des fertigen Formkörpers eine Kunststoffschicht gebildet wird, wobei mineralische Fasern insofern als nachteilig bezeichnet werden, als diese zu einem erhöhten Verschleiß bei der Aufbereitung der Masse im Extruder führen und damit die Lebensdauer der Schnecke vermindern.

Die DE-B-12 47 002 zeigt ein Verfahren und eine Vorrichtung zum Strangpressen von profilierten Erzeugnissen aus einem Gemisch von zerkleinerten Spänen von Holzabfällen, landwirtschaftlichen Abfallprodukten und ähnlichem Rohgut mit Polymerbindemittel, wozu eine Verflüssigung des Polymers über den gesamten Querschnitt des Preßkanals erforderlich ist. Die US-A-2 485 523 befaßt sich mit der hydraulischen Injektion von Kunststoff als kontinuierlicher Streifen nach Verflüssigung des Kunststoffs. Die JP-A-59/139 633 zeigt das Abziehen von Luft aus geschmolzenem Kunststoffmaterial, um im wiedererstarrten Thermoplast Lufteinschlüsse zu verhindern.

Ausgehend von der genannten EP-A-258 684 liegt der Erfindung die Aufgabe zugrunde, ein Verfahren zum Herstellen eines formhaltigen Halbzeugs und ein solches zur Weiterverarbeitung von faserverstärkten Thermoplastteilen vorgesehenes Halbzeug zu schaffen, das einerseits eine hohe Beständigkeit auch über längere Lager- und Transportzeiten bis zur Herstellung des endgültigen Formteils gewährleistet, andererseits mit vertretbarem Energieaufwand und vertretbarer Belastung der Mischungskomponenten auskommt.

Erfindungsgemäß wird die genannte Aufgabe mit einem Verfahren zum Herstellen von formhaltigem Halbzeug aus Fasern und aus Thermoplast aufweisendem Bindemittel dadurch gelöst, daß ein schüttfähiges Vorprodukt aus Fasern und aus Thermoplast enthaltendem Bindemittel verdichtet und lediglich in einem dünnen Mantelbereich über die Schmelztemperatur des Thermoplasts erhitzt wird und nach Abkühlung ein fester Mantel aus Fasern und wieder erstarrten Thermoplast enthaltendem Bindemittel gebildet wird, der einen Kern in Form einer Mischung aus Fasern und aus Thermoplast enthaltendem Bindemittel umgibt.

Eine Vorrichtung zur Durchführung des Verfahrens ist dadurch gekennzeichnet, daß eine Schmelzeinrichtung mit einem Schmelzkanal, durch den das zu verarbeitende Material als Endlosstrang hindurchgedrückt wird, vorgesehen ist und sich an die Schmelzeinrichtung eine Kühleinrichtung anschließt.

Ein erfindungsgemäßes Halbzeug aus faserverstärktem Thermoplast ist gekennzeichnet durch einen festen Mantel aus Fasern und nach Schmelzen wieder erstarrtem Thermoplast und einem verdichteten filz- oder watteartigen Kern in Form einer Mischung aus Fasern und aus Thermoplast enthaltendem Bindemittel.

Das erfindungsgemäße Verfahren ermöglicht eine Vereinfachung des Herstellungsablaufs sowie einen hohen Automatisierungsgrad bei der Formteilherstellung. Für die Weiterverarbeitung ist keine an das Enderzeugnis angepaßte Konfektionierung des Halbzeugs erforderlich. Die Investitionskosten können niedrig gehalten werden. Durch die Ausbildung als geschlossenes System der erfindungsgemäßen Vorrichtung kann eine Zersetzung der Thermoplast-Matrix durch Überhitzung ausgeschlossen werden, wodurch eine verminderte Brandgefahr und eine erhöhte Umweltfreundlichkeit gegeben ist. Das erfindungsgemäße Verfahren ermöglicht große Variationsmöglichkeiten hinsichtlich des Einsatzes von höherwertigen Thermoplasten (z.B. PA, PTP) und der Verwendung unterschiedlicher Verstärkungsfasern. Insbesondere kann das erfindungsgemäß hergestellte Halbzeug zur Weiterverarbeitung durch inerte, durch den filz- oder watteartigen Kern geblasene Heißgase oder Heißluft bis unter den Schmelzpunkt des Polymers vorerhitzt oder bis über seinen Schmelzpunkt erhitzt werden, was insbesondere bei Rezirkulation des Erhitzungsgases wenig energieintensiv ist.

Insbesondere kann das Ausgangsmaterial in einer Standardpaketgröße zugeführt werden und muß nicht, wie dies bei der Glasmattenherstellung erforderlich ist, nach den speziellen Einsatzgewichten etc. der Formteile angepaßt sein.

Soweit nicht hinreichend verdichtetes Material, wie dies bei der Verwendung von nach dem Stande der Technik hergestellten Materials an sich der Fall ist, sondern der erwähnte watteartige Filz unmittelbar zugeführt wird, so sieht eine bevorzugte Ausgestaltung der Erfindung vor, daß das watteartige Vorprodukt vorverdichtet und unmittelbar dem Endlosstrang zugeführt wird bzw. daß der Schmelzeinrichtung eine Komprimierstation unmittelbar vorgeschaltet ist, wobei gemäß einer Weiterbildung weiterhin vorgesehen sein kann, daß die Komprimierstation einen gekühlten Verdichtungskanal aufweist, an den unmittelbar der Schmelzkanal der Schmelzeinrichtung anschließt und daß an dem der Übergangsstelle von Verdichtungskanal und Schmelzkanal abgewandten Ende des Verdichtungskanals ein Verdichtungs- und Förderkolben bewegbar angeordnet ist und insbesondere, daß der Schmelzkanal der Schmelzeinrichtung über seine gesamte Länge von Heizelementen umgeben ist.

In bevorzugter Ausgestaltung ist vorgesehen, daß bei der Verdichtung des Ausgangsmaterials Vakuum angelegt wird, um so Lufteinschlüsse und dergleichen zu vermeiden. Hierzu können insbesondere im Bereich der Komprimierstation, Vakuumleitungen, über die das Vakuum angelegt wird, vorgesehen sein. Gemäß einer bevorzugten Ausgestaltung ist der Schmelzkanal über seine gesamte Länge mit Heizelementen versehen. Die Erwärmung des Materials im Schmelzkanal erfolgt auf eine Temperatur, die höher als die Schmelztemperatur des Thermoplasts des Materials ist und insbesondere bis zu 100°C über der Schmelztemperatur liegt. Das erfindungsgemäße Verfahren erlaubt einen sehr hohen Durchsatz an zu erweichendem Material, so ist ein Durchsatz von 2 kg oder mehr pro Minute ohne weiteres erreichbar.

Die Wandung des Schmelzkanals wird durch seine Heizelemente kurzzeitig hoch über den Schmelzpunkt des Polymers des Ausgangsprodukts erhitzt, so daß das Polymer nur in einem relativ dünnen Mantelbereich schmilzt, nicht aber im inneren Kern der im Kanal befindlichen watteartigen Faser-Polymer-Masse. Anschließend erfolgt ein Abkühlen, so daß das geschmolzene Polymer wieder erstarrt und dabei plastifiziert. Wesentlich ist eine schnelle Erhitzung, so daß ein Schmelzen des Polymers im Außenbereich erfolgt, ohne daß die hohe Temperatur in den Kernbereich geleitet wird und vorteilhafterweise ein anschließendes ebenfalls zügiges Abkühlen.

Weitere Vorteile und Merkmale der Erfindung ergeben sich aus den Ansprüchen. Ein Ausführungsbeispiel der erfindungsgemäßen Vorrichtung zum Bereitstellen einer abgestimmten Menge einer formbaren faserverstärkten Thermoplastmasse unter Bezugnahme auf die Zeichnung wird nachfolgend im einzelnen erläutert. Dabei zeigt:

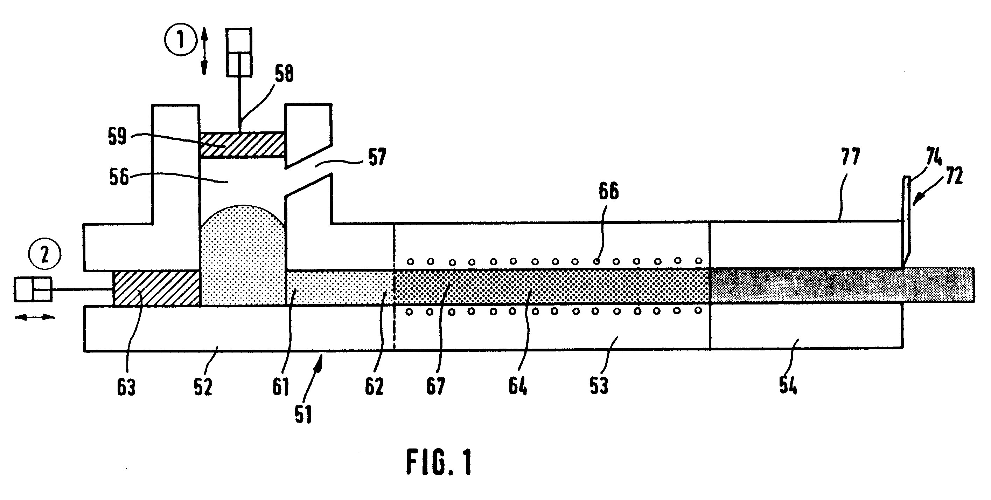

Figur 1 eine schematische Darstellung der erfindungsgemäßen Vorrichtung in Seitenansicht und

Figur 2 einen Querschnitt durch ein Halbzeug.

Die erfindungsgemäße Vorrichtung 51 zur Herstellung von formhaltigem Halbzeug aus faserverstärkten Thermoplast weist eine Komprimierstation 52, einen Schmelzkanal 64 und eine Kühlstation 54 auf. Die Komprimierstation 52 weist eine Aufnahme- und Vorverdichtungskammer 56 auf, in die ein Zuführkanal 57 mündet und die als Kolben- und Zylindereinheit 58 mit einem Vorverdichtungskolben 59 versehen ist. Der Kolben 59 kann in geeigneter Weise, insbesonderer hydraulisch angetrieben werden. In ihrem dem Kolben 59 abgewandten Endbereich 61 geht die Aufnahme- und Vorverdichtungskammer 56 in eine Verdichtungskammer 62 über. Die Verdichtungskammer 62 weist einen Verdichtungs- und Vorschubkolben 63 auf, der ebenfalls in geeigneter Weise, vorzugsweise hydraulisch beaufschlagt wird.

An die kanalartig ausgebildete Verdichtungskammer 62 schließt sich ein Schmelzkanal 64 der Schmelzeinrichtung 53 an. Der Schmelzkanal 64 ist durch Heizelemente 66 umgeben, mittels derer das in ihm befindliche faserverstärkte Thermoplastmaterial 67 in seinem äußeren Mantelbereich über seine Schmelztemperatur erhitzt wird.

An die Schmelzeinrichtung schließt sich die schon erwähnte Kühlstation 54 an. Der Kühlstation 54 ist am der Schmelzeinrichtung 53 abgewandten Ende eine Trenneinrichtung 72 nachgeordnet, die einen vorzugsweise hydraulisch betätigten Trennschieber 74 aufweist. Der Kanal kann an sich beliebigerweise quadratische oder auch rechteckige Querschnittsform aufweisen, hat aber vorzugsweise einen kreisrunden Querschnitt.

Durch den Zuführkanal 57 wird das Rohstoffmaterial zugeführt. Dies kann portionsweise geschehen, indem durch den Zuführkanal 57 in die Aufnahme- und Vorverdichtungskammer 56 eine bestimmte Menge an Material eingefüllt und dieses dann durch den Vorverdichtungskolben 59 vorverdichtet wird. Vor dem Zuführkanal 57 kann ein Bunker vorgeordnet sein, in dem sich das zu verarbeitende Material beispielsweise in schüttfähiger Form befindet. In diesem Falle wird vorzugsweise am Ende des Zuführkanals noch ein Sperrschieber vorgesehen. Das zu verarbeitende Material ist ein mit Glasfasern beladenes Thermoplast enthaltendes Bindemittel, das schütt- oder rieselfähig vorliegt und insbesondere eine in Kunststoffbeuteln verpackte, rieselfähige Masse ist (EP-A-258 684).

Es kann sich um durch Verwirbelung von Fasern und Thermoplast enthaltendes Bindemittel hergestelltes watteartiges Filzmaterial handeln, das der erfindungsgemäßen Vorrichtung direkt von einer Wirbelkammer zugeführt wird, oder das nach Abpackung ebenfalls in Kunststoffbeuteln bereitgestellt wird. Es kann vorgesehen sein, daß das Ausgangsprodukt, soweit es in Kunststoffbeuteln vorliegt, durch Öffnen, wie Aufschneiden derselben, aus diesen ausgeschüttet und zugeführt wird. Bevorzugterweise werden aber Kunststoffbeutel aus einem Material verwendet, das mit dem Thermoplast des Bindemittels des Werkstoffs kompatibel ist, insbesondere das gleiche Material ist. In diesem Falle kann das Material mitsamt den Kunststoffbeuteln direkt über den Zuführkanal 57 der Aufnahme- und Vorverdichtungskammer 56 zugeführt werden.

Nach Zuführung in die Aufnahme- und Vorverdichtungskammer 56 wird das Material, wie schon erwähnt, mittels des Kolbens 59 vorverdichtet und in den Verdichtungskanal 62 eingedrückt. Der Kolben 59 bleibt in seiner unteren Stellung, die mit der oberen Begrenzungswand des Kanals 62 schließt, stehen. Anschließend übernimmt der Kolben 63 die Hauptverdichtung des Materials, indem er in Richtung des Schmelzkanals bewegt wird und einerseits das Material weiter verdichtet, andererseits das Material in und durch den Schmelzkanal 64 bewegt. Bei dieser Hauptverdichtung kann gleichzeitig an den Verdichtungskanal 62 Unterdruck angelegt werden, um die Verdichtung zu unterstützen. In der Schmelzstation 53, 64 wird das Material nur in seinem Außenbereich über die Schmelztemperatur seines Polymers erhitzt, während die Temperatur in einem inneren Kernbereich unterhalb der Schmelztemperatur bleibt. Derart wird der Polymeranteil nur in einem Mantelbereich geschmolzen, der Kernbereich des Materials bleibt dagegen filzartig.

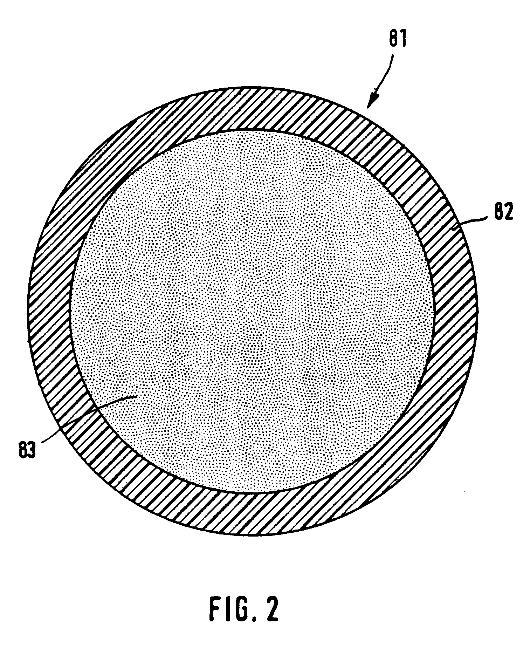

Anschließend wird das im Schmelzkanal 64 in seinem Außenbereich angeschmolzene Material in die Kühlstation 54 eingeschoben. In der Kühlstation 54 wird das vorher im Schmelzkanal 64 erhitzte Material wieder schnell abgekühlt. Die Kühlstation kann durch ein Kühlmittel durchflossene Kühlleitungen aufweisen, wobei das Kühlmittel vorzugsweise kaltes Wasser ist, aber auch andersartige Kühlmittel eingesetzt werden können. Hierdurch wird der durch die Erhitzung flüssig-pastöse Außenmantelbereich des im Kanal geförderten Materials schnell abgekühlt und erstarrt zu einer festen den weiterhin watte- oder filzartigen Kern umgebenden Wand, so daß ein formhaltiger Strang entsteht. Dieser wird auf dem der Schmelzeinrichtung 53 abgewandten Ende der Kühleinrichtung 54 ausgestoßen und kann dort mittels der Trenneinrichtung 72 in beliebige Portionen zerschnitten werden. Bei einem Arbeitskanal der erfindungsgemäßen Vorrichtung 51 mit kreisförmigem Querschnitt entsteht ein Halbprodukt oder -zeug 81 (Fig. 2) in Form eines Zylinders mit einem starren plastifizierten Außenmantel 82 und einem inneren filz-oder watteartigen verdichteten Kern 83 des nicht ausgeschmolzenen Ausgangsprodukts. Das Halbzeug 81 ist formhaltig und kann in dieser Form weitertransportiert und verarbeitet, insbesondere erneut vollständig erhitzt und aufgeschmolzen werden, um hieraus gewünschte Formteile herzustellen. Ein wesentlicher Vorteil des erfindungsgemäßen Halbzeugs 81 besteht darin, daß einerseits auch im filzartigen Kern 83 keine Trennung von homogen vermischten Fasern einerseits und polymerenthaltendem Bindemittel andererseits stattfindet, sondern die homogene Mischung auch bei längerer Lagerung und Transport aufrecht erhalten werden kann und andererseits zur Endfertigung eine relativ wenig energieverbrauchende schnelle zumindestens Vorerwärmung des inneren Kerns durch heißes inertes Gas, wie Helium oder Stickstoff oder aber Heißluft erfolgen kann, was bisher nicht möglich war. Die Aufrechterhaltung der homogenen Verteilung wird insbesondere dadurch unterstützt, daß der filz- oder watteartige Kern in seiner verdichteten und kompaktierten Form durch den starren, plastifizierten Außenmantel aufrecht erhalten wird. Es hat sich gezeigt, daß auch an den Schnittflächen der durch die Trenneinrichtung 72 getrennten Zylinder kein filzartiges Material austritt oder herausgepreßt wird. Zusätzlich kann hier ggfls. Ein dünnes plastifiziertes Gitter, Netz oder Wabenmuster durch die Verwendung eines heißen Schiebers, der einen dünnen Oberflächenfilm der getrennten Stirnseiten der Halbzeuge 81 aufschmilzt, geschaffen werden.

**Patentansprüche**

1. Verfahren zum Herstellen von formhaltigem Halbzeug aus Fasern und aus Thermoplast aufweisendem Bindemittel, dadurch gekennzeichnet, daß ein schüttfähiges Vorprodukt aus Fasern und aus Thermoplast enthaltendem Bindemittel verdichtet und lediglich in einem dünnen Mantelbereich über die Schmelztemperatur des Thermoplasts erhitzt wird und nach Abkühlung ein fester Mantel aus Fasern und wieder erstarrten Thermoplast enthaltendem Bindemittel gebildet wird, der einen Kern in Form einer Mischung aus Fasern und aus Thermoplast enthaltendem Bindemittel umgibt.

2. Verfahren nach Anspruch 1, dadurch gekennzeichnet, daß das Vorprodukt nach dem Vorverdichten unmittelbar einem Endlosstrang des Gemischs aus Fasern und aus Thermoplast enthaltendem Bindemittel angefügt wird.

3. Verfahren nach einem der Ansprüche 1 oder 2, dadurch gekennzeichnet, daß nach Abkühlen eine Trennung in Halbzeugabschnitte erfolgt.

4. Verfahren nach einem der Ansprüche 1 bis 3, dadurch gekennzeichnet, daß das Vorprodukt in Portionen zugeführt wird, deren Größe nicht einer Chargen-Menge des herzustellenden Halbzeugs entspricht.

5. Verfahren nach Anspruch 4, dadurch gekennzeichnet, daß das Vorprodukt in Beuteln aus mit dem Thermoplast des Bindemittels kompatiblem, insbesondere gleichem Material als verpackte, filzartige Portionen zugeführt wird.

6. Verfahren nach einem der Ansprüche 1 bis 5, dadurch gekennzeichnet, daß das Vorprodukt als watteartiger Filz zugeführt wird.

7. Vorrichtung zur Durchführung des Verfahrens nach einem der Ansprüche 1 bis 6, zwecks Herstellung von formhaltigem Halbzeug aus faserverstärktem Thermoplast, dadurch gekennzeichnet, daß eine Schmelzeinrichtung (53) mit einem Schmelzkanal (64), durch den das zu verarbeitende Material (57) als Endlosstrang hindurchgedrückt wird, vorgesehen ist und sich an die Schmelzeinrichtung (53) eine Kühleinrichtung (54) anschließt.

8. Vorrichtung nach Anspruch 7, dadurch gekennzeichnet, daß der Schmelzeinrichtung (53) eine Komprimierstation (51) unmittelbar vorgeschaltet ist.

9. Vorrichtung nach Anspruch 8, dadurch gekennzeichnet, daß die Komprimierstation (51) einen Verdichtungskanal (62) aufweist, an den unmittelbar der Schmelzkanal (64) der Schmelzeinrichtung (53) anschließt und daß an dem der Übergangsstelle von Verdichtungskanal (62) und Schmelzkanal (64) abgewandten Ende des Verdichtungskanals (62) ein Verdichtungs- und Förderkolben (63) bewegbar angeordnet ist.

10. Vorrichtung nach Anspruch 8 oder 9, dadurch gekennzeichnet, daß die Komprimierstation (51) eine Aufnahme- und Vorverdichtungskammer (56) aufweist, in die ein Zuführkanal (57) führt und in der ein Vorverdichtungskolben (59) derart beweglich ist, daß er das zugeführte Material in einen sich mit dem Verdichtungskanal (62) überschneidenden Bereich (61) der Vorverdichtungskammer (56) eindrückt.

11. Vorrichtung nach einem der Ansprüche 7 bis 10, dadurch gekennzeichnet, daß der Schmelzkanal (64) der Schmelzeinrichtung (53) über seine gesamte Länge von Heizelementen (66) umgeben ist.

12. Vorrichtung nach einem der Ansprüche 7 bis 12, dadurch gekennzeichnet, daß in der Komprimierstation (51) zur Vermeidung von Anhaften der Schmelze am Verdichtungs- und Förderkolben (63) Kühlelemente vorgesehen sind.

13. Vorrichtung nach einem der Ansprüche 7 bis 12, dadurch gekennzeichnet, daß hinter der Schmelzeinrichtung (53) und nachgeordneter Kühleinrichtung (54) Trenneinrichtungen (72, 73) vorgesehen sind.

14. Vorrichtung nach einem der Ansprüche 7 bis 13, dadurch gekennzeichnet, daß in den Verdichtungskanal (62) Vakuumleitungen münden.

15. Halbzeug aus faserverstärktem Thermoplast, gekennzeichnet durch einen festen Mantel (82) aus Fasern und nach Schmelzen wieder erstarrtem Thermoplast und einem verdichteten filz- oder watteartigen Kern (83) in Form einer Mischung aus Fasern und aus Thermoplast enthaltendem Bindemittel.

16. Halbzeug nach Anspruch 15, dadurch gekennzeichnet, daß der Kern (83) aus verdichtetem Material besteht.

17. Halbzeug nach Anspruch 15 oder 16, gekennzeichnet durch Zylinderform.

18. Halbzeug nach Anspruch 15 oder 16, gekennzeichnet durch Ovalform.

19. Halbzeug nach einem der Ansprüche 15 bis 18, dadurch gekennzeichnet, daß der feste Mantel (82) eine Stärke von weniger als 20% des Halbmessers des Halbzeugs aufweist.

20. Halbzeug nach Anspruch 19, dadurch gekennzeichnet, daß die Stärke des festen Mantels (82) höchstens 10 mm beträgt.

## Claims

1. Method for producing a preform from fibres and thermoplastic-containing binder, characterized in that a pourable initial product of fibres and thermoplastic-containing binder is compressed and is only heated to above the melting point of the thermoplastic in a thin jacket region and after cooling a firm jacket of fibres and resolidified thermoplastic-containing binder is formed, which surrounds a core in the form of a mixture of fibres and thermoplastic-containing binder.

2. Method according to claim 1, characterized in that, following precompression, the initial product is directly attached to a continuous strand of the mixture of fibres and thermoplastic-containing binder.

3. Method according to one of the claims 1 or 2, characterized in that a separation into preform portions takes place after cooling.

4. Method according to one of the claims 1 to 3, characterized in that the initial product is supplied in portions, whose size does not correspond to a batch quantity of the preform to be produced.

5. Method according to claim 4, characterized in that the initial product is supplied in bags of binder thermoplastic-compatible and in particular the same material in the form of packed, felt-like portions.

6. Method according to one of the claims 1 to 5, characterized in that the initial product is supplied as cottonwool-like felt.

7. Apparatus for performing the method according to one of the claims 1 to 6 for producing a preform from fibre-reinforced thermoplastic, characterized in that a melting device (53) with a melting channel (64) through which the material (57) to be processed is forced as a continuous strand is provided and a cooling device (54) is connected to said melting device (53).

8. Apparatus according to claim 7, characterized in that directly upstream of the melting device (53) is connected a compressing station (51).

9. Apparatus according to claim 8, characterized in that the compressing station (51) has a compression channel, to which is directly connected the melting channel (64) of the melting device (53) and that a compression and feed piston (63) is movably arranged at the end of the compression channel (62) remote from the transition point between the compression channel (62) and the melting channel (64).

10. Aparatus according to claims 8 or 9, characterized in that the compression station (51) has a reception and precompression chamber (56), into which leads a supply channel (57) and in which a precompression piston (59) is movable in such a way that it forces the supplied material into an area (61) of the precompression chamber (56) overlapping the compression channel (62).

11. Apparatus according to one of the claims 7 to 10, characterized in that the melting channel (64) of the melting device (53) is surrounded by heating elements (66) over its entire length.

12. Apparatus according to one of the claims 7 to 12, characterized in that for avoiding the adhesion of the melt to the compression and feed piston (63), cooling elements are provided in the compression station (51).

13. Apparatus according to one of the claims 7 to 12, characterized in that behind the melting device (53) and following cooling device (54) separating devices (72, 73) are provided.

14. Apparatus according to one of the claims 7 to 13, characterized in that vacuum lines issue into the compression channel (62).

15. Fibre-reinforced thermoplastic preform characterized by a firm fibre jacket (82) and, after melting, resolidified thermoplastic and a compressed felt or cottonwool-like core (83) in the form of a mixture of fibres and thermoplastic-containing binder.

16. Preform according to claim 15, characterized in that the core (83) comprises compressed material.

17. Preform according to claims 15 or 16, characterized by a cylindrical shape.

18. Preform according to claims 15 or 16, characterized by an oval shape.

19. Preform according to one of the claims 15 to 18, characterized in that the firm jacket (82) has a thickness of less than 20% of the preform radius.

20. Preform according to claim 19, characterized in that the thickness of the firm jacket (82) is max 10 mm.

## Revendications

1. Procédé de fabrication de demi-produits de forme stable à partir de fibres et de liant contenant de la matière thermoplastique, **caractérisé en ce** qu'un produit préliminaire en vrac constitué de fibres et de liant contenant de la matière thermoplastique est comprimé et chauffé seulement dans une zone superficielle de faible épaisseur au-delà de la température de fusion de la matière thermoplastique, et qu'après le refroidissement est constituée une enveloppe rigide de fibres et de liant contenant la matière thermoplastique resolidifiée, laquelle enveloppe entoure un noyau sous la forme d'un mélange de fibres et de liant contenant de la matière thermoplastique.

2. Procédé selon la revendication 1, caractérisé en ce que, après la précompression, le produit préliminaire est ajouté directement à un boudin continu du mélange de fibres et de liant contenant de la matière thermoplastique.

3. Procédé selon l'une des revendications 1 ou 2, caractérisé en ce que le refroidissement est suivi d'une séparation en sections de demi-produit.

4. Procédé selon l'une des revendications 1 à 3, caractérisé en ce que le produit préliminaire est amené sous forme de portions dont les dimensions ne correspondent pas à une quantité de charge du demi-produit à réaliser.

5. Procédé selon la revendication 4, caractérisé en ce que le produit préliminaire est amené dans des sachets réalisés dans un matériau compatible avec la matière thermoplastique du liant et notamment dans le même matériau, sous la forme de portions feutrées emballées.

6. Procédé selon l'une des revendications 1 à 5, caractérisé en ce que le produit préliminaire est amené sous la forme de feutre du type ouate.

7. Dispositif pour la mise en oeuvre du procédé selon l'une des revendications 1 à 6, pour la fabrication de demi-produits de forme stable en matière thermoplastique renforcée par des fibres, **caractérisé en ce** qu'il comprend un dispositif de fusion (53) avec un canal de fusion (64) par lequel le matériau à traiter (57) est pressé sous forme de boudin continu et que le dispositif de fusion (53) est suivi d'un système de refroidissement (54).

8. Dispositif selon la revendication 7, caractérisé en ce qu'immédiatement en amont du dispositif de fusion (53) est installé une station de compression (51).

9. Dispositif selon la revendication 8, caractérisé en ce que la station de compression (51) comprend un canal de compression (62) directement suivi du canal de fusion (64) du dispositif de fusion (53), et qu'un piston de compression et de refoulement (63) est monté de manière mobile sur l'extrémité du canal de compression (62) opposée au point de transition entre le canal de compression (62) et le canal de fusion (64).

10. Dispositif selon l'une des revendications 8 ou 9, caractérisé en ce que la station de compression (51) comprend une chambre de réception et de précompression (56) dans laquelle débouche un canal d'amenée (57) et dans laquelle un piston de précompression (59) peut être déplacé de façon à presser le matériau amené dans une zone (61) de la chambre de précompression (56) qui se chevauche avec le canal de compression (62).

11. Dispositif selon l'une des revendications 7 à 10, caractérisé en ce que le canal de fusion (64) du dispositif de fusion (53) est entouré sur toute sa longueur d'éléments de chauffage (66).

12. Dispositif selon l'une des revendications 7 à 11, caractérisé en ce que, pour éviter l'adhérence de la matière fondue sur le piston de compression et de refoulement (63), des éléments de refroidissement sont prévus dans la station de compression (51).

13. Dispositif selon l'une des revendications 7 à 12, caractérisé en ce que des dispositifs de séparation (72, 73) sont prévus en aval du dispositif de fusion (53) et du dispositif de refroidissement (54) monté en aval.

14. Dispositif selon l'une des revendications 7 à 13, caractérisé en ce que des conduites à vide débouchent dans le canal de compression (62).

15. Demi-produit de matière thermoplastique renforcée par des fibres, caractérisé en ce qu'il comprend une enveloppe rigide (82) constituée de fibres et de matière thermoplastique resolidifiée après la fusion, et un noyau (83) comprimé du type feutre ou ouate sous la forme d'un mélange de fibres et de liant contenant de la matière thermoplastique.

16. Demi-produit selon la revendication 15, caractérisé en ce que le noyau (83) est constitué d'un matériau comprimé.

17. Demi-produit selon l'une des revendications 15 ou 16, caractérisé en ce qu'il présente une forme cylindrique.

18. Demi-produit selon l'une des revendications 15 ou 16, caractérisé en ce qu'il présente une forme ovale.

19. Demi-produit selon l'une des revendications 15 à 18, caractérisé en ce que l'enveloppe rigide (82) présente une épaisseur qui est inférieure à 20 % du rayon du demi-produit.

20. Demi-produit selon la revendication 19, caractérisé en ce que l'épaisseur de l'enveloppe rigide (82) est au maximum égale à 10 mm.

FIG. 1

FIG. 2